# EUROPÄISCHE PATENTSCHRIFT

(11) **EP 2 138 325 B1**
(45) Veröffentlichungstag und Bekanntmachung des Hinweises auf die Patenterteilung: **01.05.2013**
(21) Anmeldenummer: 09160099.9
(22) Anmeldetag: 13.05.2009
(51) Int. Cl.: B60C 11/00

(54) **Lauffläche für einen Fahrzeugluftreifen**
Tire tread for pneumatic tire
Band de roulement pour pneumatique

(30) Priorität: 27.06.2008 DE 102008030711
(43) Veröffentlichungstag der Anmeldung: 30.12.2009
(73) Patentinhaber: Continental Reifen Deutschland GmbH, 30165 Hannover (DE)
(72) Erfinder: Seng, Matthias, 30449, Hannover (DE); Wiese, Klaus, 30559, Hannover (DE)
(74) Vertreter: Finger, Karsten

(56) Entgegenhaltungen:
- EP-A- 1 508 457
- EP-A- 1 967 390
- EP-A- 1 997 651
- DE-A1- 3 610 662

## Beschreibung

Die Erfindung betrifft einen Fahrzeugluftreifen in Radialbauart mit einer Radialkarkasse und einem Gürtelverband sowie einem profilierten Laufstreifen mit Profilelementen, wie Profilblöcken oder Rippen, und mit einem Laufstreifenunterteil und einem Laufstreifenoberteil, welche jeweils eine Vielzahl von fingerartig ineinander greifenden Fortsätzen aufweisen und welche aus Gummimischungen unterschiedlicher Shorehärten bestehen

Ein derartiger Fahrzeugluftreifen ist beispielsweise aus der EP-A 1 508 457 bekannt. Der Laufstreifenunterteil ist mit einer Vielzahl von in radialer Richtung verlaufenden fingerartigen Fortsätzen versehen, in deren Zwischenräume ebenfalls in radialer Richtung verlaufende Fortsätze des Laufstreifenoberteils eingreifen. Die Gummimischung des Laufstreifenoberteils unterscheidet sich von jener des Laufstreifenunterteils in der Shorehärte, welche in der Gummimischung des Laufstreifenunterteils geringer ist als in der Gummimischung des Laufstreifenoberteils. Ein Reifen mit einem derart ausgeführten Laufstreifen soll eine verbesserte Haltbarkeit bei hohen Geschwindigkeiten aufweisen.

Die DE-C-198 16 849 betrifft ein Verfahren zur Herstellung eines Fahrzeugluftreifens, bei welchem der unvulkanisierte Laufstreifen aus zumindest zwei Materialstreifen aus unterschiedlichen Kautschukmischungen hergestellt wird, welche, je nach den gewünschten Eigenschaften des Reifens, gleichzeitig oder nacheinander an unterschiedlichen Bereichen im Inneren oder in der radial äußeren Zone des vom fertigen Laufstreifens eingenommen Raumes angeordnet werden. Dabei wird insbesondere der radial innen liegende Teil des Laufstreifens, der Laufstreifenunterteil und der Teil zwischen dem Laufstreifenunterteil und der mit der Fahrbahn in Berührung kommenden Fläche durch Aufwickeln von zumindest zwei verschiedenen Materialstreifen erzeugt. Auf diese Weise sollen sich bestimmte Fahreigenschaften des Reifens besonders einfach gezielt beeinflussen lassen und der Reifen unkompliziert hergestellt werden können.

Bei einem herkömmlich beziehungsweise bei einem gemäß der EP-A-1 508 457 ausgeführten Laufstreifen erzeugt die steifere Mischung eine höhere Steifigkeit in allen Belastungsrichtungen, verschlechtert also die Dämpfung, während die weichere Mischung die Steifigkeit reduziert und die Dämpfung verbessert. Gefordert sind jedoch eine hohe Steifigkeit in Laufstreifenquerrichtung und eine geringe Steifigkeit in radialer Richtung, um die Handlingeigenschaften, die Komforteigenschaften sowie die Aquaplaningeigenschaften in Querrichtung gleichermaßen zu verbessern.

Der Erfindung liegt die Aufgabe zu Grunde, Laufstreifen derart zu gestalten, dass diese Anforderungen erfüllt sind.

Gelöst wird die gestellte Aufgabe erfindungsgemäß dadurch, dass die fingerartigen Fortsätze gegenüber der radialen Richtung geneigt sind.

Durch die Schrägstellung der fingerartigen Fortsätze wird eine Anisotropie im Laufstreifen geschaffen. Die einen, steiferen fingerartigen Fortsätze sorgen für eine Beeinflussung der Quersteifigkeit, die schräg zwischen diese eingreifenden weicheren fingerartigen Fortsätze sind in der Lage, die Dämpfung des Reifens in radialer Richtung zu erhöhen. Die Eigenschaften Dämpfung und Steifigkeit unterlagen bislang einem Zielkonflikt - eine steifere Laufstreifenmischung erhöhte zwar die Steifigkeit in allen Richtungen, verschlechterte aber ebenso die Dämpfung, eine weichere Laufstreifenmischung reduzierte die Steifigkeit, verbesserte allerdings die Dämpfung. Bei einem erfindungsgemäß ausgeführten Reifen ist es möglich, versteifende Elemente im Laufstreifen in den Hauptbelastungsrichtungen einzubringen und somit die Quersteifigkeit des Laufstreifens zu erhöhen. Bei einer radialen Belastung werden die steiferen fingerartigen Fortsätze auf Biegung belastet und können somit Schwingungen dämpfen und in die umgebende weniger steife Mischung der anderen fingerartigen Fortsätze zur Energieabsorption weiterleiten.

Gemäß einer bevorzugten Ausführungsform der Erfindung sind die Fortsätze zumindest innerhalb eines Umfangsbereiches unter einem Winkel zur radialen Richtung geneigt, welcher zwischen 20° und 85° beträgt, sodass mehr die Quersteifigkeit oder mehr die Dämpfung des Laufstreifens unter radialer Belastung beeinflusst werden kann.

Um die Schräglaufsteifigkeit des Reifens in beiden Querrichtungen zu beeinflussen beziehungsweise zu erhöhen, ist es von Vorteil, wenn der Laufstreifen zumindest einen Umfangsbereich aufweist, in welchem die Fortsätze des Laufstreifenunterteils in Richtung zur einen Reifenschulter weisend geneigt sind und zumindest einen anderen Umfangsbereich aufweist, in welchem die Fortsätze des Laufstreifenunterteils in Richtung zur anderen Reifenschulter weisend geneigt sind.

Die Größe des Neigungswinkels der Fortsätze gegenüber der radialen Richtung sollte dabei günstiger Weise in einem Umfangsbereich zwischen 20° und 85° und in einem anderen Umfangsbereich zwischen 95° und 170° betragen.

Bei einer weiteren Ausführungsvariante der Erfindung sind die Fortsätze im Querschnitt sägezahnartig ausgeführt. Je nach der Schrägstellung der Zähne lassen sich mit dieser Ausführungsvariante ebenfalls die Schräglaufsteifigkeit und die Schwingungsdämpfung in radialer Richtung beeinflussen. Von Vorteil ist eine Ausführung der sägezahnartigen Fortsätze mit oberen Flanken, welche einen Winkel von 120° bis 170° mit der radialen Richtung einschließen und unteren Flanken, welche einen Winkel mit der radialen Richtung einschließen, welcher bis zu 175° beträgt und um mindestens 20° kleiner ist als der Neigungswinkel der oberen Flanken.

Eine weitere Möglichkeit zur Variation der Beeinflussung der Quersteifigkeit und der Schwingungsdämpfung des Laufstreifens unter radialer Belastung ergibt sich bei einer Ausführung, bei welcher der Laufstreifenoberteil eine Außenschicht und der Laufstreifenunterteil eine Grundschicht aufweisen, welche Schichten eine Dicke von bis zu 20% der Gesamtdicke des aus Laufstreifenoberteil und Laufstreifenunterteil bestehenden Laufstreifens aufweisen.

Weist der Laufstreifenoberteil gemäß einer bevorzugten Ausführungsform der Erfindung eine geringere Härte auf, als der Laufstreifenunterteil, wobei die Shorehärte des Laufstreifenoberteils zwischen 41 und 65 und die Shorehärte des Laufstreifenunterteils zwischen 49 und 76 beträgt, wird eine besonders gute Eignung des Reifens für den Einsatz unter winterlichen Fahrbedingungen erreicht.

Weist hingegen der Laufstreifenoberteil eine größere Shorehärte auf als der Laufstreifenunterteil, wobei die Shorehärte des Laufstreifenoberteils zwischen 50 und 76 und jene des Laufstreifenunterteils zwischen 51 und 65 beträgt, ist ein erfindungsgemäß ausgeführter Reifen besonders für den Einsatz unter sommerlichen Fahrbedingungen geeignet.

Die konkreten Abmessungen der fingerartigen Fortsätze, insbesondere deren Querschnittsdicke, werden entsprechend der gewünschten Beeinflussung der Eigenschaften des Laufstreifens gewählt. Von Vorteil ist es jedoch, wenn die fingerartigen Fortsätze eine mittlere Querschnittsdicke von 1,5 mm bis 4 mm aufweisen.

Weitere Merkmale, Vorteile und Einzelheiten der Erfindung werden anhand der Zeichnung, die schematisch mehrere Ausführungsbeispiele darstellt, näher beschrieben. Dabei zeigen
Fig.1 einen radialen Schnitt durch den Laufstreifenbereich eines Fahrzeugluftreifens mit einer Ausführungsform der Erfindung,
Fig. 2 und Fig. 3 weitere Ausführungsformen der Erfindung anhand von radialen Schnitten durch den Laufstreifenbereich eines Fahrzeugluftreifens und
Fig. 4 einen radialen Teilschnitt durch den Laufstreifenbereich eines Fahrzeugluftreifens mit einer weiteren Ausführungsvariante der Erfindung.

Die Figuren zeigen Schnitte oder Teilschnitte durch einen PKW-Reifen im Bereich des Luftstreifens 1, wobei radial innerhalb des Laufstreifens 1 eine Karkasseinlage 3b und ein Gürtelverband 3a, welche in herkömmlicher Weise ausgeführt sein können, dargestellt sind. Der weitere Aufbau des Reifen kann ebenfalls auf herkömmliche Weise erfolgen.

Der Laufstreifen 1 ist jeweils ohne Profilierung gezeigt, wobei etwaige, in Umfangsrichtung umlaufende Umfangsnuten 2 in punktierten Linien angedeutet sind. Umfangsnuten 2 trennen in Umfangsrichtung umlaufende Profilelemente voneinander, welche Blöcke oder in Umfangsrichtung umlaufende Rippen sein können. Bei den Umfangsnuten 2 ist der jeweilige Laufstreifen 1 gegenüber dem gezeigten örtlich etwas verformt, wobei auch die dargestellten und im Folgenden näher beschriebenen Laufstreifenbestandteile im Bereich der Nuten 2 etwas verformt, bzw. etwas verschoben sind. Dies ist bekannt und hat keine nennenswerten Auswirkungen auf die Erfindung.

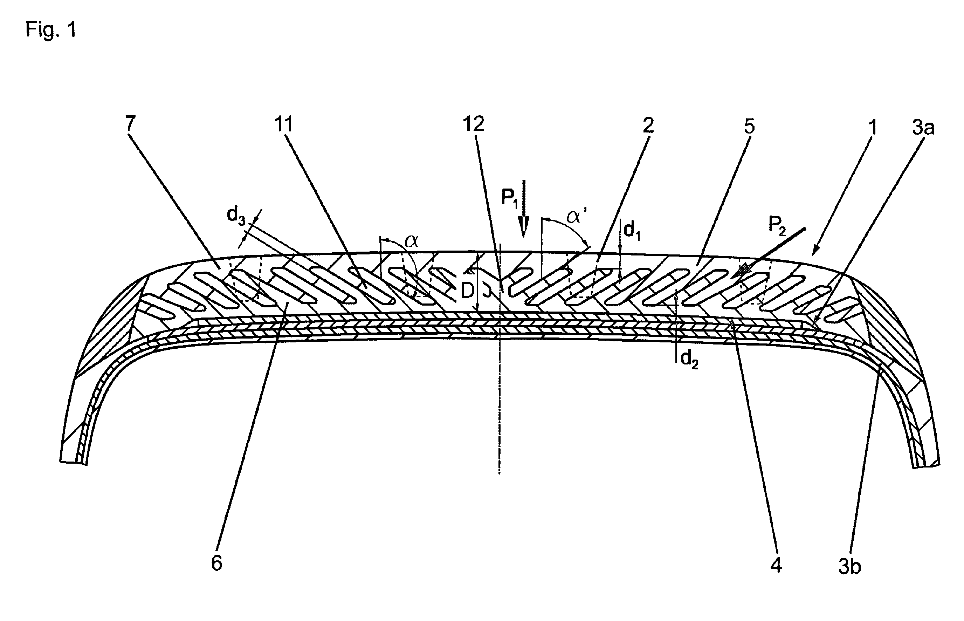

Wie Fig. 1 zeigt weist der Laufstreifen 1 einen Laufstreifenunterteil 4 und einen Laufstreifenoberteil 5 auf, die auf besondere Weise ausgeführt bzw. geschichtet sind und aus unterschiedlichen Gummimischungen bestehen. Zwischen dem Laufstreifenunterteil 4 und dem Gürtelverband 3a kann zusätzlich eine nicht gezeigte Schicht aus einer weiteren Gummimischung eingebracht sein. Der Laufstreifenunterteil 4 besteht aus einer unmittelbar an den Gürtel 3a anschließenden Grundschicht 6, von welcher fingerartig in Richtung Laufstreifenaußenseite weisend Fortsätze 9 abragen. Der Laufstreifenoberteil 5 besteht aus einer die Laufstreifenaußenseite bedeckenden Außenschicht 7 und ebenfalls aus fingerartigen Fortsätzen 11, welche die Zwischenräume zwischen den fingerartigen Fortsätzen 9 ausfüllen. In jeder Laufstreifenhälfte sind die fingerartigen Fortsätze 9 jeweils in Richtung zur Reifenschulter in dieser Laufstreifenhälfte weisend geneigt. Die derart gegenseitig geneigten Fortsätze 9 schließen in der einen Laufstreifenhälfte mit der radialen Richtung einen Winkel α von 95 bis 170°, in der anderen Laufstreifenhälfte einen Winkel α' von 20° bis 85° ein. Die Dicken d₁ und d₂ der Außenschicht 7 und der Grundschicht 6 betragen in der Größenordnung von 10 bis 20% der Laufstreifendicke D, sodass sich die durch die Fortsätze 9 und 11 gebildete Schichtung über mehr als 50% der Laufstreifendicke erstreckt. Die mittlere Querschnittsdicke d₃ der fingerartigen Fortsätze 9 und 11 wird in der Größenordnung von 1,5 mm bis 4 mm gewählt. Bei ein und demselben Laufstreifen 1 kann die Dicke d₃ der Fortsätze 11 des Laufstreifenoberteils 5 von der Dicke d₃ der Fortsätze 9 des Laufstreifenunterteils 4 abweichen, die Dicken können jedoch auch übereinstimmen. Die Anordnung und Ausgestaltung der Fortsätze 9 und 11 erfolgt jedoch derart, dass benachbarte Fortsätze 9 bzw. 11 in radialer Richtung einander zum Teil überlappen. In der Laufstreifenmitte ist ein Übergangsbereich zwischen den gegensinnig geneigten Fortsätzen 9 und 11 gebildet, welcher im Laufstreifenunterteil 4 einen in Umfangsrichtung umlaufendem mittigen Steg 12 aufweist.

Der Laufstreifenunterteil 4 und der Laufstreifenoberteil 5 gemäß Fig. 1 sind in der dargestellten Gestalt und Profilierung beispielsweise durch Extrusion herstellbar. Möglich ist auch eine getrennte Herstellung für die Laufstreifenhälften.

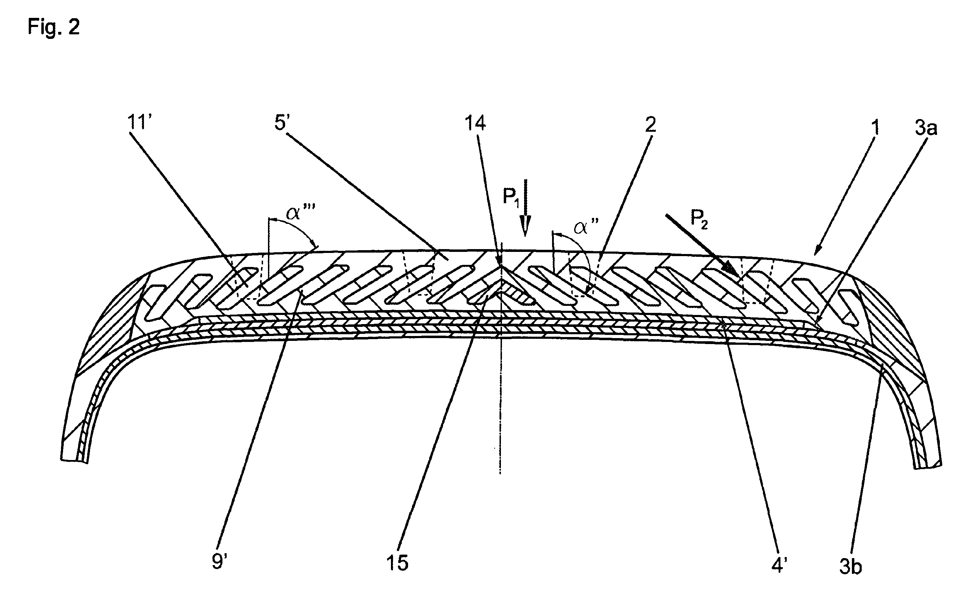

Fig. 2 zeigt eine Ausführung des Laufstreifens 1 mit einem Laufstreifenunterteil 4' und einem Laufstreifenoberteil 5', bei welchen die ineinander greifenden Fortsätze 9' und 11' entgegengesetzt zur Ausführungsform gemäß Fig. 1 geneigt sind. Die sonstige Ausführung des Unterteils 4' und des Oberteils 5' kann analog zur Ausführungsform gemäß Fig. 1 erfolgen. Die Größe des Neigungswinkels α'' entspricht der Größe des Winkels α aus Fig. 1, die Größe des Winkels α''' jener des Winkels α' aus Fig. 1. Sind der Laufstreifenunterteil 4' und Laufstreifenoberteil 5', wie gezeigt, über die Laufstreifenbreite einteilig ausgeführt, so kann der Übergangsbereich zwischen den gegensinnig geneigten Fortsätzen 9', 11' derart gestaltet sein, dass im Laufstreifenunterteil 4' eine etwa dreieckförmige Erhebung 14 vorgesehen ist. Innerhalb der dreieckförmigen Erhebung 14 kann, wie gezeigt, ein Dämpfungselement 15 aus einer stark dämpfenden Gummimischung eingebracht sein. Das Dämpfungselement 15 kann dabei, wie dargestellt, verkehrt V-förmig gestaltet sein, es kann aber auch eine Dreieckform oder eine andere Form aufweisen.

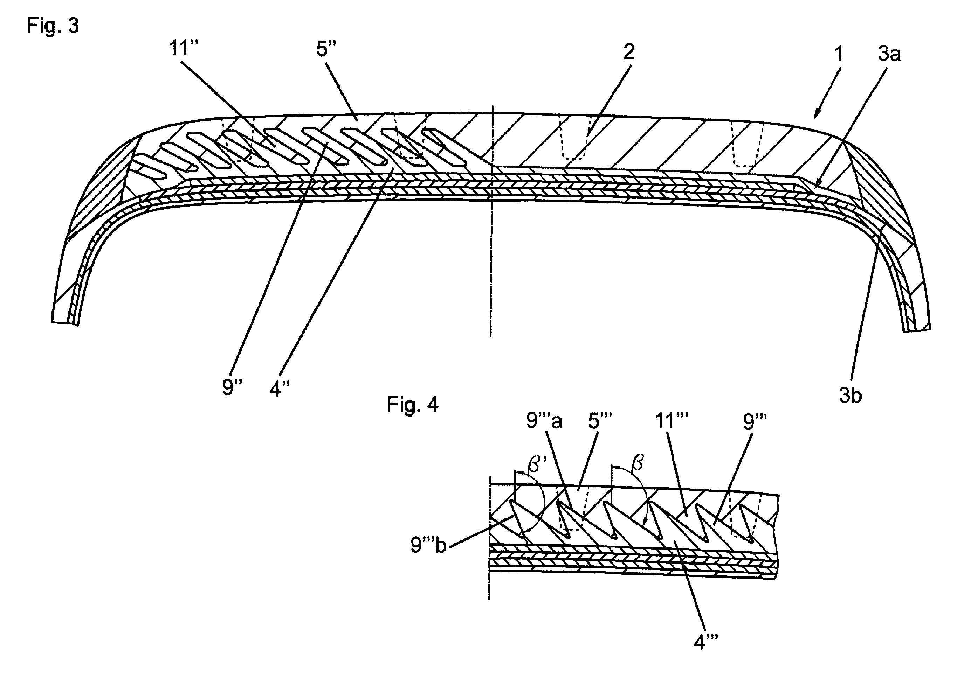

Fig. 3 zeigt eine Ausführungsvariante bei der lediglich in der einen Laufstreifenhälfte der Laufstreifenunterteil 4" und der Laufstreifenoberteil 5" mit fingerartigen Fortsätzen 9" und 11'', analog zur Fig. 1, versehen sind. In der zweiten, in dieser Figur rechten Laufstreifenhälfte, sind Laufstreifenunterteil 4" und Laufstreifenoberteil 5" jeweils in einer konstanten Dicke ausgeführt.

Fig. 4 zeigt eine Ausführungsvariante mit einem Laufstreifenunterteil 4''' und einem Laufstreifenoberteil 5''' mit fingerartigen Fortsätzen 9''' und 11''', welche sägezahnartig ausgebildet sind. Die Fortsätze 9''' des Laufstreifenunterteils 4''' sind daher derart ausgeführt, dass ihre obere Flanke 9''' a mit der radialen Richtung einen Winkel β in der Größenordnung von 120° bis 170° einschließt, die untere Flanke 9''' b verläuft unter einem Winkel β', welcher um mindestens 20° größer ist als der Winkel β und bis zu 175° beträgt. Dadurch überlappen auch bei dieser Ausführungsvariante benachbarte Fortsätze 9''' und 11''' in axialer Richtung.

Der Laufstreifenunterteil 4, 4', 4", 4''' und der Laufstreifenoberteil 5, 5', 5'', 5''' bestehen aus unterschiedlichen Gummimischungen, welche unterschiedliche Härten aufweisen, wobei jedoch die Abriebsperformance bzw. die Abriebseigenschaften der beiden Mischungen im Wesentlichen übereinstimmen.

Ist ein erfindungsgemäßer Fahrzeugluftreifen für einen Einsatz unter sommerlichen Fahrbedingungen vorgesehen, ist es von Vorteil, wenn der Laufstreifenoberteil 5, 5', 5'', 5''' aus einer Gummimischung besteht, deren Shorehärte A zwischen 50 und 76 beträgt und größer ist als die Shorehärte A (jeweils ermittelt gemäß DIN 53505) der Gummimischung des Laufstreifenunterteils 4, 4', 4'', 4''', welche zwischen 41 und 75 beträgt. Bei einem konkreten Beispiel weist der Laufstreifenoberteil 5, 5', 5'', 5''' eine Härte von 61 und der Laufstreifenunterteil 4, 4', 4", 4''' eine Härte von 57 auf.

Ist ein erfindungsgemäßer ausgeführter Fahrzeugluftreifen vorrangig für den Einsatz unter winterlichen Fahrbedingungen vorgesehen, ist es günstig, wenn der Laufstreifenoberteil 5, 5', 5'', 5''' aus der Gummimischung mit der geringeren Shorehärte besteht, wobei die Shorehärte des Laufstreifenoberteils 5, 5', 5'', 5''' zwischen 41 und 65 und die Shorehärte des Unterteils 4, 4', 4'', 4''' zwischen 49 und 76 beträgt. Gemäß einer konkreten Ausführungsform könnte der Laufstreifenoberteil 5, 5', 5'', 5''' eine Härte von 55 und der Laufstreifenunterteil 4, 4', 4", 4''' eine Härte von 65 aufweisen.

Die entsprechende Einstellung der Härte der Gummimischungen kann auf übliche Weise erfolgen, beispielsweise über den Anteil an Öl und Weichmachern sowie durch die Füllstoffe in den jeweiligen Ausgangskautschukmischungen. Dabei gilt, dass ein höherer Anteil an Ölen und Weichmachern und ein geringerer Anteil an Füllstoffen, insbesondere Ruß oder Silika, eine weichere Mischung ergibt.

Um die Abriebsperformance für den Laufstreifenoberteil 5, 5', 5'', 5''' und den Laufstreifenunterteil 4, 4', 4", 4''' gleich oder zumindest im Wesentlichen gleich einzustellen, kann ebenfalls auf bekannte und übliche Maßnahmen zurückgegriffen werden. Insbesondere wird über den Ölanteil und den Anteil an Füllstoffen sowie die verwendeten Polymertypen und Vernetzungssysteme eine entsprechende Einstellung der Abriebseigenschaften durchgeführt.

Durch die Schrägstellung der Fortsätze 9, 9', 9'', 9''' und 11, 11', 11'', 11''' je nach Ausführung in einem Laufstreifen auch in unterschiedlichen Richtungen, wird eine Anisotropie im Laufstreifen geschaffen. Die steiferen Bestandteile sorgen für eine höhere Quersteifigkeit, während die schräg dazwischen liegenden weicheren Gummibestandteile die Dämpfung des Reifens in radialer Richtung erhöhen. In Fig. 1 und Fig. 2 ist durch den Pfeil P₁ die Richtung von Radialkräften beim Abrollen des Reifens angedeutet, der Pfeil P₂ verdeutlicht die in Richtung einer Resultierenden aus Seitenkraft und Normalkraft. Die Erfindung ermöglicht es daher, den Laufstreifen in den Hauptbelastungsrichtungen zu versteifen, vor allem die Quersteifigkeit des Laufstreifens zu erhöhen. Die Neigung der Fortsätze 9, 9', 9'', 9''' und 11, 11', 11'', 11'''wird vorteilhafterweise an die Richtung der resultierenden Kraft unter Seitenkrafteinfluss weitgehend angepasst, um derart die Schräglaufsteifigkeit des Reifens zu erhöhen. Unter radialer Belastung in Richtung des Pfeils P₁ werden die steiferen Fortsätze auf Biegung belastet, können somit Schwingungen dämpfen und in die umgebenden weniger steifen Fortsätze zur Energieabsorption weiterleiten. Dies kann zusätzlich zu einer Verbesserung der Trockenbremseigenschaften beitragen.

Die Enden der fingerartigen Fortsätze 9, 9', 9", 9''' bzw. 11, 11', 11'', 11''' können abgerundet oder eckig ausgeführt sein. Wie bereits erwähnt können erfindungsgemäß ausgeführte Laufstreifen durch Extrusion entsprechender Mischungsprofile und Zusammenfügen der Profile oder durch gemeinsame Extrusion mit einem Mehrfachextruder hergestellt werden. Es ist ferner möglich, die erfindungsgemäße Schichtung des Laufstreifens durch die ineinandergreifenden Fortsätze lediglich in einem oder mehreren ausgewählten Umfangsbereich(en) vorzusehen, die schmäler oder breiter als eine Laufstreifenhälfte sein können.

### Bezugsziffernliste

- 1: Laufstreifen
- 2: Umfangsnut
- 3a: Gürtel
- 3b: Radialkarkasse
- 4, 4', 4'', 4''': Laufstreifenunterteil
- 5, 5', 5'', 5''': Laufstreifenoberteil
- 6: Grundschicht
- 7: Außenschicht
- 9, 9', 9'', 9''': Fortsätze
- 11, 11', 11'', 11''': Fortsätze
- 12: Steg
- 14: Erhebung
- 15: Dämpfungselement
- α, α', α'', α''': Winkel
- β, β': Winkel

## Patentansprüche

1. Fahrzeugluftreifen mit einer Radialkarkasse (3b) und einem Gürtelverband (3a) sowie einem profilierten Laufstreifen (1) mit Profilelementen, wie Profilblöcken oder Rippen, und mit einem Laufstreifenunterteil (4, 4', 4", 4"') und einem Laufstreifenoberteil (5, 5', 5", 5"'), welche jeweils eine Vielzahl von fingerartig ineinander greifenden Fortsätzen (9, 9', 9",9"'; 11, 11', 11", 11 "') aufweisen und welche aus Gummimischungen unterschiedlicher Shorehärten bestehen,
**dadurch gekennzeichnet,**
**dass** die fingerartig ineinander greifenden Fortsätze (9, 9', 9", 9"'; 11, 11', 11", 11"') gegenüber der radialen Richtung geneigt sind.

2. Fahrzeugluftreifen nach Anspruch 1, **dadurch gekennzeichnet, dass** die Fortsätze (9, 11) zumindest innerhalb eines Umfangsbereiches unter einem Winkel (α) zur radialen Richtung geneigt verlaufen, welcher zwischen 20° und 85° beträgt.

3. Fahrzeugluftreifen nach Anspruch 1 oder 2, **dadurch gekennzeichnet, dass** der Laufstreifen (1) zumindest einen Umfangsbereich aufweist, in welchem die Fortsätze (9, 9') des Laufstreifenunterteils (4, 4') in Richtung zur einen Reifenschulter weisend geneigt sind und zumindest einen anderen Umfangsbereich ausweist, in welchem die Fortsätze (9, 9') des Laufstreifenunterteils (4, 4') in Richtung zur anderen Reifenschulter weisend geneigt sind.

4. Fahrzeugluftreifen nach Anspruch 3, **dadurch gekennzeichnet, dass** die Fortsätze (9, 9") in dem einem Umfangsbereich unter einem Winkel (α', α"') von 20° bis 85° und in dem anderen Umfangsbereich unter einem Winkel (α, α") von 95° bis 170°zur radialen Richtung geneigt sind.

5. Fahrzeugluftreifen nach Anspruch 1, **dadurch gekennzeichnet, dass** die Fortsätze (9"', 11"') sägezahnartig ausgeführt sind.

6. Fahrzeugluftreifen nach Anspruch 5, **dadurch gekennzeichnet, dass** die oberen Flanken (9"'a) der Fortsätze (9"', 11"') einen Winkel (β) von 120° bis 170° mit der radialen Richtung einschließen und die unteren Flanken einen Winkel (β') mit der radialen Richtung einschließen, welcher bis zu 175° beträgt und um mindesten 20° kleiner ist als der Neigungswinkel (β) der oberen Flanken (9a"').

7. Fahrzeugluftreifen nach einem der Ansprüche 1 bis 6, **dadurch gekennzeichnet, dass** der Laufstreifenoberteil (5, 5', 5", 5"') eine Außenschicht (7) und der Laufstreifenunterteil (4, 4', 4", 4"') eine Grundschicht (6) aufweist, welche Schichten (6, 7) eine Dicke von bis zu 20% der Gesamtdicke (D) des aus Laufstreifenoberteil (5, 5', 5", 5"') und Laufstreifenunterteil (4, 4', 4", 4"') bestehenden Laufstreifens (1) aufweisen.

8. Fahrzeugluftreifen nach einem der Ansprüche 1 bis 7, **dadurch gekennzeichnet, dass** die Gummimischung des Laufstreifenoberteils (5, 5', 5", 5"') eine geringere Shorehärte aufweist als die Gummimischung des Laufstreifenunterteils (4, 4', 4", 4"').

9. Fahrzeugluftreifen nach Anspruch 8, **dadurch gekennzeichnet, dass** die Gummimischung des Laufstreifenoberteils (5, 5', 5", 5"') eine Shorehärte zwischen 41 und 65 und die Gummimischung des Laufstreifenunterteils (4, 4', 4", 4"') eine Shorehärte zwischen 49 und 76 aufweist.

10. Fahrzeugluftreifen nach einem der Ansprüche 1 bis 7, **dadurch gekennzeichnet, dass** die Gummimischung des Laufstreifenoberteils (5, 5', 5", 5"') eine größere Shorehärte aufweist als die Gummimischung des Laufstreifenunterteils (4, 4', 4" 4"').

11. Fahrzeugluftreifen nach Anspruch 10, **dadurch gekennzeichnet, dass** die Gummimischung des Laufstreifenoberteils (5, 5', 5", 5"') eine Shorehärte zwischen 50 und 76 und die Gummimischung des Laufstreifenunterteils (4, 4', 4", 4"') eine Shorehärte zwischen 41 und 65 aufweist.

12. Fahrzeugluftreifen nach einem der Ansprüche 1 bis 11, **dadurch gekennzeichnet, dass** die fingerartigen Fortsätze (9, 9', 9", 9"', 11, 11', 11", 11"') eine mittlere Querschnittsdicke von 1,5 mm bis 4 mm aufweisen.

## Claims

1. Pneumatic vehicle tyre with a radial carcass (3b) and a belt assembly (3a) and also a profiled tread (1) with profile elements, such as profile blocks or ribs, and with a tread lower part (4, 4' , 4'', 4"') and a tread upper part (5, 5', 5'', 5''') which each have a plurality of extensions (9, 9', 9'', 9'''; 11, 11', 11'', 11''') engaging in one another in a finger-like manner and which consist of rubber mixtures of different Shore hardnesses, **characterized in that** the extensions (9, 9', 9'', 9'''; 11, 11', 11'', 11''') engaging in one another in a finger-like manner are inclined with respect to the radial direction.

2. Pneumatic vehicle tyre according to Claim 1, **characterized in that** the extensions (9, 11) extend in an inclined manner at least within a circumferential region at an angle (α) to the radial direction which is between 20° and 85°.

3. Pneumatic vehicle tyre according to Claim 1 or 2, **characterized in that** the tread (1) has at least one circumferential region in which the extensions (9, 9') of the tread lower part (4, 4') are inclined so as to point in the direction of one tyre shoulder and has at least one other circumferential region in which the extensions (9, 9') of the tread lower part (4, 4') are inclined so as to point in the direction of the other tyre shoulder.

4. Pneumatic vehicle tyre according to Claim 3, **characterized in that** the extensions (9, 9'') in one circumferential region are inclined with respect to the radial direction at an angle (α', α''') of 20° to 85° and are inclined with respect to the radial direction in the other circumferential region at an angle (α, α'') of 95° to 170°.

5. Pneumatic vehicle tyre according to Claim 1, **characterized in that** the extensions (9''', 11''') have a sawtooth-like design.

6. Pneumatic vehicle tyre according to Claim 5, **characterized in that** the upper flanks (9'''a) of the extensions (9''', 11''') enclose an angle (β) of 120° to 170° with the radial direction and the lower flanks enclose an angle (β') with the radial direction which is up to 175° and is smaller by at least 20° than the angle of inclination (β) of the upper flanks (9a''').

7. Pneumatic vehicle tyre according to one of Claims 1 to 6, **characterized in that** the tread upper part (5, 5', 5'', 5''') has an outer layer (7) and the tread lower part (4, 4', 4'', 4"') has a base layer (6) which layers (6, 7) have a thickness of up to 20% of the total thickness (D) of the tread (1) consisting of tread upper part (5, 5', 5'', 5''') and tread lower part (4, 4', 4'', 4''').

8. Pneumatic vehicle tyre according to one of Claims 1 to 7, **characterized in that** the rubber mixture of the tread upper part (5, 5', 5'', 5''') has a lower Shore hardness than the rubber mixture of the tread lower part (4, 4', 4'', 4''').

9. Pneumatic vehicle tyre according to Claim 8, **characterized in that** the rubber mixture of the tread upper part (5, 5', 5'', 5''') has a Shore hardness between 41 and 65 and the rubber mixture of the tread lower part (4, 4', 4'', 4''') has a Shore hardness between 49 and 76.

10. Pneumatic vehicle tyre according to one of Claims 1 to 7, **characterized in that** the rubber mixture of the tread upper part (5, 5', 5'', 5''') has a greater Shore hardness than the rubber mixture of the tread lower part (4, 4', 4'', 4''').

11. Pneumatic vehicle tyre according to Claim 10, **characterized in that** the rubber mixture of the tread upper part (5, 5', 5'', 5''') has a Shore hardness between 50 and 76 and the rubber mixture of the tread lower part (4, 4', 4'', 4"') has a Shore hardness between 41 and 65.

12. Pneumatic vehicle tyre according to one of Claims 1 to 11, **characterized in that** the finger-like extensions (9, 9', 9'', 9''', 11, 11', 11'', 11''') have an average cross-sectional thickness of 1.5 mm to 4 mm.

## Revendications

1. Pneumatique de véhicule comprenant une carcasse radiale (3b) et un ensemble de ceinture (3a) ainsi qu'une bande de roulement profilée (1) dotée d'éléments profilés tels que des blocs profilés ou des nervures et comprenant une partie inférieure de bande de roulement (4, 4', 4'', 4''') et une partie supérieure de bande de roulement (5, 5', 5'', 5''') qui comprennent respectivement une pluralité de prolongements en forme de doigts (9, 9', 9'', 9'' ; 11, 11' , 11'', 11''') qui viennent en prise les uns dans les autres et sont constitués de mélanges de caoutchouc de duretés Shore différentes,
**caractérisé en ce que**
les prolongements en forme de doigts (9, 9', 9'', 9''' ; 11, 11' , 11'', 11''') qui viennent en prise les uns dans les autres sont inclinés par rapport à la direction radiale.

2. Pneumatique de véhicule selon la revendication 1, **caractérisé en ce que** les prolongements (9, 11) s'étendent de manière inclinée suivant un angle (α) par rapport à la direction radiale au moins à l'intérieur d'une région périphérique, lequel angle vaut entre 20 ° et 85 °.

3. Pneumatique de véhicule selon la revendication 1 ou 2, **caractérisé en ce que** la bande de roulement (1) comprend au moins une région périphérique dans laquelle les prolongements (9, 9') de la partie inférieure de bande de roulement (4, 4') sont inclinés de manière orientée en direction d'un épaulement de pneumatique et comprend au moins une autre région périphérique dans laquelle les prolongements (9, 9') de la partie inférieure de pneumatique (4, 4') sont inclinés de manière orientée en direction de l'autre épaulement de pneumatique.

4. Pneumatique de véhicule selon la revendication 3, **caractérisé en ce que** les prolongements (9, 9'') sont inclinés, par rapport à la direction radiale, suivant un angle (α', α''') de 20 ° à 85 ° dans l'une des régions périphériques et suivant un angle (α, α" ) de 95 ° à 170° dans l'autre région périphérique.

5. Pneumatique de véhicule selon la revendication 1, **caractérisé en ce que** les prolongements (9''', 11''') sont réalisés en dents de scie.

6. Pneumatique de véhicule selon la revendication 5, **caractérisé en ce que** les flancs supérieurs (9"'a) des prolongements (9''', 11''') forment avec la direction radiale un angle (β) de 120 ° à 170 ° et les flancs inférieurs forment avec la direction radiale un angle (β') qui vaut jusqu'à 175 ° et est inférieur d'au moins 20 ° à l'angle d'inclinaison (β) des flancs supérieurs (9a''').

7. Pneumatique de véhicule selon l'une quelconque des revendications 1 à 6, **caractérisé en ce que** la partie supérieure de bande de roulement (5, 5', 5'', 5''') comprend une couche extérieure (7) et la partie inférieure de bande de roulement (4, 4', 4'', 4''') comprend une couche de base (6), lesquelles couches (6, 7) présentent une épaisseur de jusqu'à 20 % de l'épaisseur totale (D) de la bande de roulement (1) constituée de la partie supérieure de bande de roulement (5, 5', 5'', 5''') et de la partie inférieure de bande de roulement (4, 4', 4'', 4''').

8. Pneumatique de véhicule selon l'une quelconque des revendications 1 à 7, **caractérisé en ce que** le mélange de caoutchouc de la partie supérieure de bande de roulement (5, 5', 5'', 5''') présente une dureté Shore plus faible que le mélange de caoutchouc de la partie inférieure de bande de roulement (4, 4', 4'', 4''').

9. Pneumatique de véhicule selon la revendication 8, **caractérisé en ce que** le mélange de caoutchouc de la partie supérieure de bande de roulement (5, 5', 5'', 5''') présente une dureté Shore entre 41 et 65 et le mélange de caoutchouc de la partie inférieure de bande de roulement (4, 4', 4'', 4''') présente une dureté Shore entre 49 et 76.

10. Pneumatique de véhicule selon l'une quelconque des revendications 1 à 7, **caractérisé en ce que** le mélange de caoutchouc de la partie supérieure de bande de roulement (5, 5', 5'', 5''') présente une dureté Shore plus élevée que le mélange de caoutchouc de la partie inférieure de bande de roulement (4, 4', 4'', 4''').

11. Pneumatique de véhicule selon la revendication 10, **caractérisé en ce que** le mélange de caoutchouc de la partie supérieure de bande de roulement (5, 5', 5'', 5''') présente une dureté Shore entre 50 et 76 et le mélange de caoutchouc de la partie inférieure de bande de roulement (4, 4', 4" , 4''') présente une dureté Shore entre 41 et 65.

12. Pneumatique de véhicule selon l'une quelconque des revendications 1 à 11, **caractérisé en ce que** les prolongements en forme de doigts (9, 9', 9'', 9''', 11, 11' , 11'', 11''') présentent une épaisseur moyenne en section transversale de 1,5 mm à 4 mm.
